(19) Europäisches Patentamt
European Patent Office
Office européen des brevets

(11) **EP 1 075 657 B1**

(12) **EUROPÄISCHE PATENTSCHRIFT**

(45) Veröffentlichungstag und Bekanntmachung des Hinweises auf die Patenterteilung:
**28.05.2008 Patentblatt 2008/22**

(21) Anmeldenummer: **99948566.7**

(22) Anmeldetag: **09.04.1999**

(51) Int Cl.:
*G01N 27/417* (2006.01)

(86) Internationale Anmeldenummer:
**PCT/DE1999/001091**

(87) Internationale Veröffentlichungsnummer:
**WO 1999/057555 (11.11.1999 Gazette 1999/45)**

(54) **VERFAHREN ZUR BESTIMMUNG DER NOx-KONZENTRATION**

METHOD FOR DETERMINING NOx CONCENTRATION

PROCEDE POUR LA DETERMINATION DE LA CONCENTRATION EN NOx

(84) Benannte Vertragsstaaten:
**DE FR GB**

(30) Priorität: **30.04.1998 DE 19819462**

(43) Veröffentlichungstag der Anmeldung:
**14.02.2001 Patentblatt 2001/07**

(73) Patentinhaber: **VDO Automotive AG
93055 Regensburg (DE)**

(72) Erfinder:
• **ZHANG, Hong
D-93057 Regensburg (DE)**
• **RÖSSLER, Jürgen
D-93053 Regensburg (DE)**

(56) Entgegenhaltungen:
EP-A- 0 810 430          US-A- 4 981 125
US-A- 5 033 438          US-A- 5 034 112

**Beschreibung**

Die Erfindung betrifft ein Verfahren zur Bestimmung der $NO_x$-Konzentration in einem Gas, insbesondere im Abgas einer Brennkraftmaschine, gemäß dem Oberbegriff des Patentanspruchs 1.

Zur Messung der $NO_x$-Konzentration in einem Gas, z.B. im Abgas einer Brennkraftmaschine, ist es bekannt, einen Dickschicht-Meßaufnehmer zu verwenden. Ein solcher Meßaufnehmer ist in der Veröffentlichung N. Kato et al., "Performance of Thick Film NOx Sensor on Diesel and Gasoline Engines", Society of Automotive Engineers, Veröffentlichung 970858, 1997, beschrieben. Dieser Meßaufnehmer weist zwei Meßzellen auf und besteht aus einem Sauerstoffionen-leitenden Zirkoniumoxid. Er verwirklicht folgendes Meßkonzept: In einer ersten Meßzelle, der das zu messende Gas über eine Diffusionsbarriere zugeführt wird, wird mittels eines ersten Sauerstoff-Ionen-Pumpstroms eine erste Sauerstoffkonzentration eingestellt, wobei keine Zersetzung von $NO_x$ stattfindet. In einer zweiten Meßzelle, die über eine Diffusionsbarriere mit der ersten Meßzelle verbunden ist, wird der Sauerstoffgehalt mittels eines zweiten Sauerstoff-Ionen-Pumpstroms weiter abgesenkt und $NO_x$ an einer Meßelektrode zersetzt. Der so erzeugte Sauerstoff wird als Maß für die $NO_x$-Konzentration erfaßt. Der gesamte Meßaufnehmer wird dabei mittels eines elektrischen Heizers auf eine erhöhte Temperatur, z.B. 430°C gebracht. Der Meßfehler des in dieser Veröffentlichung beschriebenen Meßaufnehmers entspricht einer $NO_x$-Konzentration von 22ppm.

Dieser Meßfehler gilt für den stationären Betrieb, d.h. wenn keine starken Konzentrationsänderungen zu messen sind. Ein Restsauerstoffgehalt in der zweiten Meßzelle, der nicht aus einer Zersetzung von $NO_x$ stammt, führt zu diesem Meßfehler, da der Sauerstoff in der zweiten Meßzelle als Maß für die $NO_x$-Konzentration genommen wird.

Darüber hinaus ist der Meßfehler des beschriebenen $NO_x$-Meßaufnehmers stark temperaturabhängig. Dies hat seine Ursache darin, daß die erste Meßzelle mit dem zu messenden Gas über eine Diffusionsbarriere und über eine zweite Diffusionsbarriere mit der zweiten Meßzelle verbunden ist. Die Diffusion durch diese Diffusionsbarrieren ist temperaturabhängig, was zu einem temperaturabhängigen Restsauerstoffgehalt in der zweiten Meßzelle führt. Nach dem Stand der Technik versucht man sich dadurch zu behelfen, daß die Soll-Konzentrationen in den beiden Meßzellen so gewählt werden, daß der zweite Sauerstoff-Ionen-Pumpstrom zum Einstellen der SauerstoffKonzentration in der zweiten Meßzelle auf einen festen Wert geregelt werden kann, an dem größtmögliche Temperaturunabhängigkeit gegeben ist.

Es ist Aufgabe der vorliegenden Erfindung, ein Verfahren anzugeben, mit dem die $NO_x$-Konzentration in einem Gas unter. Verwendung des oben beschriebenen Meßaufnehmers exakter erfaßt werden kann.

Die Aufgabe wird durch die Merkmale des Anspruchs 1 gelöst.

Erfindungsgemäß wird der vom $NO_x$-Meßaufnehmer gelieferte Rohmeßwert mit einem multiplikativen Korrekturwert f und einem additiven Korrekturwert a korrigiert. Beide Korrekturwerte werden aus einem Kennfeld entnommen, das vorzugsweise aus der Prüfstandsvermessung des Meßaufnehmers unter bestimmten Bedingungen, insbesondere bei verschiedenen Temperaturen, $NO_x$-Konzentrationen, $NO_x$-Änderungsraten etc., ermittelt wurde und das mindestens vom zweiten Sauerstoff-Ionen-Pumpstrom abhängt, vorzugsweise zusätzlich von der Temperatur des zu messenden Gases und/oder der Temperatur des Meßaufnehmers, da der einen Meßfehler verursachende Restsauerstoffgehalt vom zweiten Sauerstoff-Ionen-Pumpstrom Ip1 abhängt. Der verbesserte Meßwert wird dann nach folgender Gleichung erhalten:

$$NO_x(\text{verbesserter Meßwert}) = f \cdot NO_x(\text{Rohmeßwert}) + a \quad (I).$$

Die Abhängigkeit der Korrekturfaktoren vom Sauerstoff-Ionen-Pumpstrom in der zweiten Meßzelle, der ein Maß für den den Meßfehler verursachenden Restsauerstoffgehalt in der zweiten Meßzelle ist, und vorzugsweise zusätzlich von der Temperatur des Sensors, die ein Maß für die Diffusion durch die Diffusionsbarrieren ist, und der Gastemperatur sowie die Auswertung dieser Abhängigkeit zur Korrektur des gemessenen $NO_x$-Rohmeßwertes macht ein Regeln des zweiten Sauerstoff-Ionen-Pumpstromes auf einen konstanten Wert darüber hinaus unnötig.

Vorteilhafte Ausgestaltungen der Erfindung sind in den Ansprüchen gekennzeichnet.

Die Erfindung wird nachfolgend anhand der Zeichnung näher beschrieben. Die Zeichnung zeigt:

Fig. 1 eine schematische Darstellung einer Vorrichtung zur Durchführung des erfindungsgemäßen Verfahrens und

Fig. 2 eine schematische Schnittdarstellung eines $NO_x$-Meßaufnehmers.

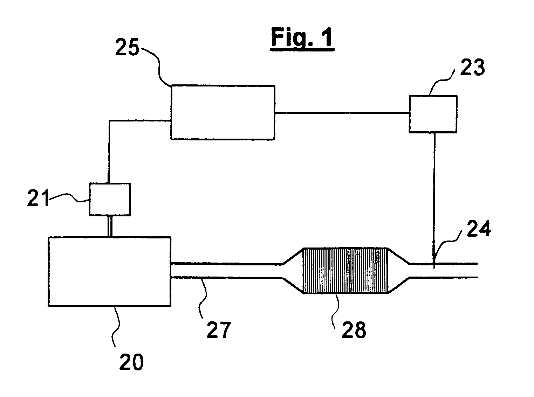

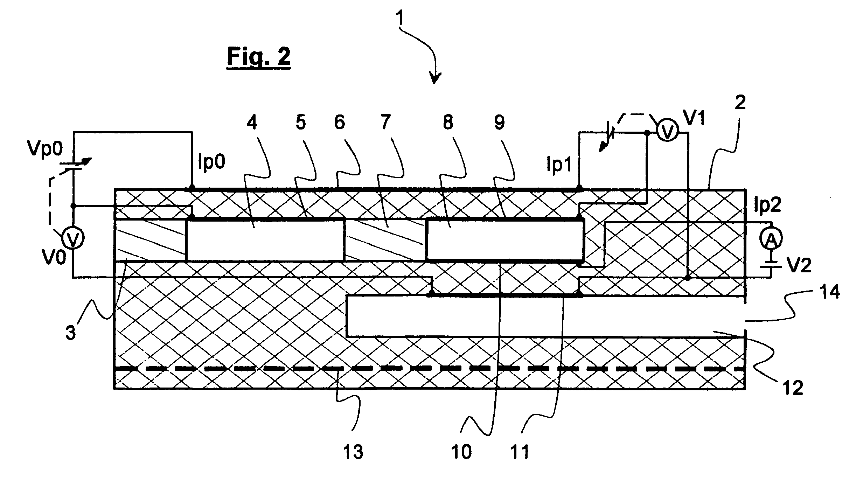

In Fig. 2 ist ein Schnitt durch einen $NO_x$-Meßaufnehmer 1 schematisch dargestellt. Dieser Meßaufnehmer wird in der in Fig. 1 dargestellten Vorrichtung als Meßaufnehmer 24 zur Bestimmung der $NO_x$-Konzentration im Abgastrakt 27 einer Brennkraftmaschine 20 verwendet. Der Rohmeßwert des $NO_x$-Meßaufnehmers 24 wird von einer Korrektureinheit 23 nach dem erfindungsgemäßen Verfahren korrigiert und der korrigierte Wert dem Betriebssteuergerät 25 der Brennkraftmaschine 20 zugeführt. Das Betriebssteuergerät 25 verwendet den korrigierten $NO_x$-Konzentrationsmeßwert zum Ansteuern des Kraftstoffzufuhrsystems 21 der Brennkraftmaschine 20, so daß ein $NO_x$-reduzierender oder -speichernder Katalysator 28 optimales Betriebsverhalten zeigt.

Der Meßaufnehmer 1, 24 ist in Fig. 2 detaillierter dargestellt. Er besteht aus einem Festkörperelektrolyten 2, der von dem zu messenden Abgas umgeben ist. Das Abgas diffundiert durch eine Diffusionsbarriere 3 in eine erste Meßzelle 4. Der Sauerstoffgehalt in dieser Meßzelle wird mittels einer ersten Nernstspannung V0 zwischen einer ersten Elektrode 5 und einer Umgebungsluft ausgesetzten Referenzelektrode 11 gemessen. Dabei ist die Referenzelektrode 11 in einem Luftkanal 12 angeordnet, in den über eine Öffnung 14 Umgebungsluft gelangt. Beide Elektroden sind herkömmliche Platinelektroden. Der Meßwert der ersten Nernstspannung V0 wird dazu verwendet, eine Stellspannung Vp0 einzustellen. Die Stellspannung Vp0 treibt einen ersten Sauerstoff-Ionen-Pumpstrom Ip0 durch den Festkörperelektrolyten 2 zwischen der ersten Elektrode 5 und einer Außenelektrode 6. Der durch eine gestrichelte Linie dargestellte Regeleingriff der ersten Nernstspannung V0 auf die Stellspannung Vp0 hat zur Folge, daß der erste Sauerstoff-Ionen-Pumpstrom Ip0 so geregelt wird, daß in der ersten Meßzelle 4 eine vorbestimmte erste Sauerstoffkonzentration vorliegt.

Die erste Meßzelle 4 ist mit einer zweiten Meßzelle 8 über eine weitere Diffusionsbarriere 7 verbunden. Durch diese Diffusionsbarriere 7 diffundiert das in der Meßzelle 4 vorhandene Gas. Die zweite Sauerstoffkonzentration in der zweiten Meßzelle 8 wird wiederum über eine zweite Nernstspannung V1 zwischen einer zweiten Elektrode 9, die ebenfalls eine Platinelektrode ist, und der Referenzelektrode 11 gemessen und zur Regelung eines zweiten Sauerstoff-Ionen-Pumpstroms Ip1 verwendet. Der zweite Sauerstoff-Ionen-Pumpstrom Ip1 aus der ersten Meßzelle 8 verläuft von der zweiten Elektrode 9 durch den Festkörperelektrolyten 2 zur Außenelektrode 6. Mit Hilfe der zweiten Nernstspannung V1 wird der zweite Sauerstoff-Ionen-Pumpstrom Ip1 so geregelt, daß in der zweiten Meßzelle 8 eine vorbestimmte geringe, zweite Sauerstoffkonzentration vorliegt. Das von den bisherigen Vorgängen in den Meßzellen 4 und 8 nicht betroffene $NO_x$ wird nun an der Meßelektrode 10, die katalytisch wirksam ausgestaltet ist, unter Anlegen der Spannung V2 zwischen der Meßelektrode 10 und der Referenzelektrode 11 zersetzt und der freigewordene Sauerstoff durch den Festkörperelektrolyten 2 in einem dritten Sauerstoff-Ionen-Pumpstrom Ip2 zur Referenzelektrode 11 hin gepumpt. Der dritte Sauerstoff-Ionen-Pumpstrom Ip2 wird bei ausreichend geringem Restsauerstoffgehalt an der Meßelektrode 10 nur von Sauerstoffionen getragen, die aus der Zersetzung von $NO_x$ stammen. Der Strom Ip2 ist somit ein Maß für die $NO_x$-Konzentration in der Meßzelle 8 und somit im zu messenden Abgas.

Der Restsauerstoffgehalt in der Meßzelle 8 ist idealerweise Null, realerweise jedoch von verschiedenen Betriebsbedingungen des Meßaufnehmers 1 abhängig:

- Die Diffusion durch die Diffusionsbarrieren 3 und 7 ist temperaturabhängig. Dadurch hat der üblicherweise auf einen festen Wert geregelte zweite Sauerstoff-Ionen-Pumpstrom Ip1 je nach Temperatur des Meßaufnehmers einen unterschiedlich hohen Restsauerstoffgehalt in der Meßzelle 8 zur Folge.

- Weiter ist bei starken $NO_x$-Konzentrationssprüngen die Regelung des ersten Sauerstoff-Ionen-Pumpstroms Ip0 nicht in der Lage, die vorbestimmte erste Sauerstoffkonzentration in der ersten Meßzelle 4 sofort einzustellen, was aufgrund der eingeschränkten Regelgeschwindigkeit für den zweiten Sauerstoff-Ionen-Pumpstrom Ip1 wiederum einen höheren Restsauerstoffgehalt in der zweiten Meßzelle 8 und somit einen größeren Meßfehler zur Folge hat.

Die Erfindung schafft hier dadurch Abhilfe, daß der vom Meßaufnehmer 1, 24 gelieferte Rohmeßwert in einer Korrektureinheit 23 kennfeldabhängig zu einem verbesserten Meßwert korrigiert wird. Diese Korrektur erfolgt unter Verwendung eines multiplikativen Korrekturwertes f und eines additiven Korrekturwertes a nach der eingangs erwähnten Gleichung (I). Die Korrekturwerte f, a sind in der Korrektureinheit 23 in einem Kennfeld vorgesehen, das vom zweiten Sauerstoff-Ionen-Pumpstrom Ip1, von der Temperatur des zu messenden Gases und von der Temperatur des Meßaufnehmers 1 abhängig ist, wobei das Kennfeld aus einer Prüfstandsvermessung eines Meßaufnehmers 1, 24 stammt und die Temperatur des Meßaufnehmers 1 die Temperatur am Ort der zweiten Meßzelle 8 ist.

Die Temperatur des zu messenden Gases kann im Falle der Brennkraftmaschine 20 über einen Abgastemperaturmeßaufnehmer gemessen oder über ein Temperaturmodell rechnerisch bestimmt werden. Gegebenenfalls können auch Schätzwerte für die tatsächlichen Temperaturen verwendet werden. Sollten die Temperaturen des zu messenden Gases und des Meßaufnehmers meßtechnisch nicht verfügbar sein, hängt das Kennfeld nur vom zweiten Sauerstoff-Ionen-Pumpstrom Ip1 ab. Da die Temperatur des Meßaufnehmers 1 über einen Heizer 13 auf eine konstante Zieltemperatur geregelt werden kann, kann der multiplikative Korrekturwert f und der additive Korrekturwert a auch direkt abhängig vom zweiten Sauerstoff-Ionen-Pumpstrom Ip1 und der Temperatur des zu messenden Gases bestimmt werden und nur dieser Zusammenhang ausgewertet werden.

Die Erfindung erlaubt es weiter, den zweiten Sauerstoff-Ionen-Pumpstrom Ip1 freier zu regeln, da das nach dem Stand der Technik erforderliche feste Einregeln eines vorbestimmten Wertes für Ip1 aufgrund der Korrektur des Ip1-verursachten Meßfehlers und der Temperaturabhängigkeit nicht mehr erforderlich ist.

**Patentansprüche**

1. Verfahren zur Bestimmung der NO$_x$-Konzentration in einem Gas, insbesondere im Abgas einer Brennkraftmaschine, mittels eines Meßaufnehmers (1) mit

   - einer ersten Meßzelle (4), in die ein Teil des Gases eingeführt wird und in der eine erste Sauerstoffkonzentration mittels eines ersten Sauerstoff-Ionen-Pumpstromes (Ip0) eingeregelt wird, und
   - einer zweiten Meßzelle (8), die mit der ersten Meßzelle (4) verbunden ist und in der eine zweite Sauerstoffkonzentration mittels eines zweiten Sauerstoff-Ionen-Pumpstromes (Ip1) eingeregelt wird, wobei
   - die NO$_x$-Konzentration mit einer Meßelektrode (10) in der zweiten Meßzelle gemessen wird,

   **dadurch gekennzeichnet, daß**

   - der Meßwert der NO$_x$-Konzentration mit einem multiplikativen Korrekturwert (f) und einem additiven Korrekturwert (a) korrigiert wird, wobei beide Korrekturwerte aus einem Kennfeld entnommen werden, das mindestens vom zweiten Sauerstoff-Ionen-Pumpstrom (Ip1) abhängt.

2. Verfahren nach Anspruch 1, **dadurch gekennzeichnet, daß** das Kennfeld in einer Prüfstandsvermessung des Meßaufnehmers (1) unter Variation mindestens einer der folgenden Parameter bestimmt wird: NO$_x$-Konzentration, Änderungsrate der NO$_x$-Konzentration, O$_2$-Konzentration, Änderungsrate der O$_2$-Konzentration.

3. Verfahren nach Anspruch 1 oder 2, **dadurch gekennzeichnet, daß** das Kennfeld in einer Prüfstandsvermessung des Meßaufnehmers (1) bei vorbestimmten Prüfgasbedingungen unter Verstellen des zweiten Sauerstoff-Ionen-Pumpstromes Ip1 über einen bestimmten Bereich bestimmt wird.

4. Verfahren nach Anspruch 1, 2 oder 3, **dadurch gekennzeichnet, daß** das Kennfeld zusätzlich noch von der Temperatur des Meßaufnehmers (1) abhängt.

5. Verfahren nach Anspruch 4, **dadurch gekennzeichnet, daß** die Temperatur des Meßaufnehmers (1) die Temperatur an der zweiten Meßzelle (8) ist.

6. Verfahren nach einem der vorherigen Ansprüche, **dadurch gekennzeichnet, daß** das Kennfeld zusätzlich noch von der Temperatur des zu messenden Gases abhängt.

**Claims**

1. Method for determining the NO$_x$ concentration in a gas, in particular in the exhaust gas of an internal combustion engine, by means of a measuring sensor (1) having

   - a first measuring cell (4), into which a part of the gas is introduced and in which a first oxygen concentration is adjusted by means of a first oxygen-ion pumping current (Ip0), and
   - a second measuring cell (8), which is connected to the first measuring cell (4) and in which a second oxygen concentration is adjusted by means of a second oxygen-ion pumping current (Ip1), with
   - the NO$_x$ concentration being measured with a measuring electrode (10) in the second measuring cell,

   **characterised in that**

   - the measured value of the NO$_x$ concentration is corrected with a multiplicative correction value (f) and an additive correction value (a), with both correction values being taken from a characteristic diagram, which depends at least on the second oxygen-ion pumping current (Ip1).

2. Method according to claim 1, **characterised in that** the characteristic diagram is determined in a test bench measurement of the measuring sensor (1) by varying at least one of the following parameters: NO$_x$ concentration, rate of change of the NO$_x$ concentration, O$_2$ concentration, rate of change of the O$_2$ concentration.

3. Method according to claim 1 or 2, **characterised in that** the characteristic diagram is determined in a test bench measurement of the measuring sensor (1) with predetermined test gas conditions by adjusting the second oxygen-ion pumping current Ip1 over a certain area.

**4.** Method according to claim 1, 2 or 3, **characterised in that** the characteristic diagram still also depends on the temperature of the measuring sensor (1).

**5.** Method according to claim 4, **characterised in that** the temperature of the measuring sensor (1) is the temperature at the second measuring cell (8).

**6.** Method according to one of the preceding claims, **characterised in that** the characteristic diagram still also depends on the temperature of the gas to be measured.

**Revendications**

**1.** Procédé pour déterminer la concentration de $NO_x$ dans un gaz, plus particulièrement dans un gaz d'échappement d'un moteur à combustion interne, au moyen d'un capteur de mesure (1) avec

- une première cellule de mesure (4), dans laquelle une partie du gaz est introduite et dans laquelle une première concentration d'oxygène est ajustée au moyen d'un premier courant de pompage d'ions d'oxygène (Ip0) et
- une seconde cellule de mesure (8), qui est reliée à la première cellule de mesure (4) et dans laquelle une seconde concentration d'oxygène est ajustée au moyen d'un deuxième courant de pompage d'ions d'oxygène (Ip1),
- la concentration de $NO_x$ étant mesurée avec une électrode de mesure (10) dans la seconde cellule de mesure,

**caractérisé en ce que**

- la valeur de mesure de la concentration de $NO_x$ est corrigée avec une valeur de correction (f) multiplicatrice et une valeur de correction (a) additive, les deux valeurs de correction étant issues d'un champ caractéristique qui dépend au moins du deuxième courant de pompage d'ions d'oxygène (Ip1).

**2.** Procédé selon la revendication 1, **caractérisé en ce que** le champ caractéristique est déterminé dans une mesure test du capteur de mesure (1) avec la variation au moins d'un des paramètres suivants : concentration de $NO_x$, taux de modification de la concentration de $NO_x$, concentration d'$O_2$, taux de modification de la concentration d'$O_2$.

**3.** Procédé selon la revendication 1 ou 2, **caractérisé en ce que** le champ caractéristique est déterminé dans une mesure test du capteur de mesure (1) selon des conditions de gaz test prédéterminées avec réglage du deuxième courant de pompage d'ions d'oxygène Ip1 sur une zone définie.

**4.** Procédé selon la revendication 1, 2 ou 3, **caractérisé en ce que** le champ caractéristique dépend également encore de la température du capteur de mesure (1).

**5.** Procédé selon la revendication 4, **caractérisé en ce que** la température du capteur de mesure (1) est la température de la seconde cellule de mesure (8).

**6.** Procédé selon l'une quelconque des revendications précédentes, **caractérisé en ce que** le champ caractéristique dépend également encore de la température du gaz à mesurer.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **N. KATO et al.** Performance of Thick Film NOx Sensor on Diesel and Gasoline Engines. *Society of Automotive Engineers,* 1997